(19) Europäisches Patentamt
European Patent Office
Office européen des brevets

(11) EP 1 159 306 B1

(12) # EUROPÄISCHE PATENTSCHRIFT

(45) Veröffentlichungstag und Bekanntmachung des Hinweises auf die Patenterteilung:
**28.04.2004 Patentblatt 2004/18**

(21) Anmeldenummer: **00909225.5**

(22) Anmeldetag: **21.02.2000**

(51) Int Cl.[7]: **C08F 4/50**, C08F 12/08, C08F 36/04, C08F 4/72

(86) Internationale Anmeldenummer:
**PCT/EP2000/001406**

(87) Internationale Veröffentlichungsnummer:
**WO 2000/050468 (31.08.2000 Gazette 2000/35)**

(54) **HETEROLEPTISCHE ERDALKALIMETALLVERBINDUNGEN UND VERFAHREN ZUR STEREOSELEKTIVEN ANIONISCHEN POLYMERISATION**

HETEROLEPTIC ALKALINE-EARTH METAL COMPOUNDS AND METHODS FOR CARRYING OUT STEREOSELECTIVE ANIONIC POLYMERIZATION

COMPOSES DE METAUX ALCALINOTERREUX HETEROLEPTIQUES ET PROCEDE POUR LA POLYMERISATION ANIONIQUE STEREOSELECTIVE

(84) Benannte Vertragsstaaten:
**AT BE CH CY DE DK ES FI FR GB GR IE IT LI LU MC NL PT SE**

(30) Priorität: **25.02.1999 DE 19908079**

(43) Veröffentlichungstag der Anmeldung:
**05.12.2001 Patentblatt 2001/49**

(73) Patentinhaber: **BASF AKTIENGESELLSCHAFT**
**67056 Ludwigshafen (DE)**

(72) Erfinder:
- **KNOLL, Konrad**
  **D-67069 Ludwigshafen (DE)**
- **BRINTZINGER, Hans-Herbert**
  **CH-8274 Tägerswilen (CH)**
- **HARDER, Sjoerd**
  **D-78467 Konstanz (DE)**
- **WEEBER, Armin**
  **D-88677 Markdorf (DE)**
- **FEIL, Florian**
  **D-78462 Konstanz (DE)**

(56) Entgegenhaltungen:
**DE-A- 19 754 504**

- **WESTERHAUSEN M ET AL: "JOURNAL OF ORGANOMETALLIC CHEMISTRY,CH,ELSEVIER-SEQUOIA S.A. LAUSANNE" , JOURNAL OF ORGANOMETALLIC CHEMISTRY,CH,ELSEVIER-SEQUOIA S.A. LAUSANNE, VOL. 541, NR. 1-2, PAGE(S) 261-268 XP004093725 ISSN: 0022-328X See the entire doct.**
- **BURKEY, DAVID J. ET AL: "Encapsulated Alkaline - Earth Metallocenes. 5. Kinetic Stabilization of Mono[Tetraisopropylcyclopentadienyl]calciu m Complexes" , ORGANOMETALLICS (1994), 13(7), 2773-86 XP000920505 in der Anmeldung erwähnt Spalte 6; Beispiel 5**
- **TESH, KRIS F. ET AL: "Formation, Structures, and Reactions of Calcium and Barium Mono(alkoxide) Complexes" , J. AM. CHEM. SOC. (1994), 116(6), 2409-17 XP000914586 in der Anmeldung erwähnt Spalte 4; Beispiel 3**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 159 306 B1

## Beschreibung

Die Erfindung betrifft einen Polymerisationsinitiator, enthaltend eine Erdalkalimetallverbindung ausgewählt aus der Gruppe

a) der heteroleptischen Erdalkalimetallverbindungen der Formel I

$$L - M - R \qquad (I)$$

oder

b) der kationischen Erdalkalimetallkomplexe der Formel II

$$[D \rightarrow M - R]^{+} X- \qquad (II)$$

wobei

M: Ca, Sr oder Ba,

L: ein polymerisationsinaktiver Ligand,

R: ein polymerisationsaktiver Ligand,

D: ein Donorligand und

X: ein nicht koordinierendes Anion

bedeuten.

Weiterhin betrifft die Erfindung Verfahren zur Herstellung der Polymerisationsinitiatoren und Verfahren zur anionischen Polymerisation in Gegenwart der Polymerisationsinitiatoren.

Styrol kann sowohl radikalisch, anionisch, kationisch oder in Gegenwart von Metallocenkatalysatoren polymerisiert werden. Bei der thermisch oder mittels Peroxiden initiierten radikalischen Polymerisation wird ataktisches Polystyrol gebildet.

Die Herstellung von syndiotaktischem Polystyrol in Gegenwart von Metallocenkatalysatorsystemen ist bekannt und z.B. ausführlich beschrieben in EP-A-0 535 582. Syndiotaktisches Polystyrol besitzt aufgrund seiner Kristallinität einen sehr hohen Schmelzpunkt von ca. 270°C, hohe Steifigkeit und Zugfestigkeit, Dimensionsstabilität, eine niedrige Dielektrizitätskonstante und eine hohe Chemikalienbeständigkeit. Das mechanische Eigenschaftsprofil wird selbst bei Temperaturen über der Glastemperatur beibehalten.

Isotaktisches Polystyrol, erhältlich mittels Katalysatoren aus Titantetrachlorid und Alkylaluminiumchloriden, wurde von G. Natta et al. in Journal of the American Chemical Society 77 (1955), Seite 1708, beschrieben. Isotaktisches Polystyrol ist kristallin und besitzt einen Schmelzpunkt von 240°C. Aufgrund der sehr langsamen Kristallisationsgeschwindigkeit ist es für technische Anwendungen, z.B für den Spritzguß, nicht geeignet.

Die anionische und kationische Polymerisation führt wie die radikalische Polymerisation in der Regel ebenfalls zu ataktischem Polystyrol. Aufgrund des lebenden Charakters der anionischen Polymerisation weist diese gegenüber der radikalischen oder durch Metallocene katalysierten Polymerisation einige Vorteile auf. So ist beispielsweise eine einfache Kontrolle des Molekulargewichts über das Verhältnis von Initiator zu Monomeren und die Bildung von Blockcopolymeren möglich. Die nach dem anionischen Verfahren hergestellten Polymeren weisen eine enge Molekulargewichtsverteilung und niedrige Restmonomerengehalte auf.

Die anionische Polymerisation von Styrol und Butadien wird in der Regel durch lithiumorganische Polymerisationsinitiatoren gestartet. Die anionische Polymerisatisationsinitiierung durch bariumorganische Verbindungen ist beispielsweise aus US 3,965,080, US 4,012,336 bekannt. Die nicht vorveröffentlichte DE-A 197 54 504 beschreibt ein verbessertes Herstellungsverfahren von Erdalkalidiorganylverbindungen.

Russian Chemical Reviews, Vol. 50, 1981, S. 602-614, gibt einen Überblick über Synthesemöglichkeiten und die Verwendung von Erdalkaliorganylen in der anionischen Polymerisation von ungesättigten Monomeren. Die bekannten Synthesen für Erdalkaliorganyle sind teilweise aufwendig oder liefern die gewünschten Verbindungen in geringen Ausbeuten oder mit Nebenprodukten verunreinigt.

B. Nakhmanovich et al., Journal of Makromol. Science Chem. A9(4), Seiten 575 bis 596 (1975), beschreiben die statistische Copolymerisation von Styrol und Butadien mit einem hohen cis 1,4-Anteil der Butadieneinheiten.

Die stereoselektive Polymerisation von Styrol mit anionischen Polymerisationsinitiatoren ist bislang nicht beschrieben.

Die aus Tesh et al. Journal of the American Chemical Society 116 (1994), Seite 2409 bis 2417, und Burkey et al. Organometallics 13 (1994), Seite 2773 bis 2786, bekannten heteroleptischen Erdalkalimetallverbindungen sind nicht polymerisationsaktiv.

Aufgabe der vorliegenden Erfindung ist daher die Bereitstellung eines anionischen Polymerisationsinitiators, der zugleich stereoselektiv hinsichtlich der Polymerisation von Styrol ist. Der Polymerisationsinitiator sollte die Vorteile der anionischen und der metallocenkatalysierten Styrolpolymerisation vereinigen.

Eine weitere Aufgabe bestand darin, ein einfaches und günstiges Verfahren zur Herstellung der Polymerisationsinitiatoren bereitzustellen.

Demgemäß wurde ein Polymerisationsinitiator gefunden, enthaltend eine Erdalkalimetallverbindung ausgewählt aus der Gruppe

a) der heteroleptischen Erdalkalimetallverbindungen der Formel I

$$L - M - R \qquad (I)$$

oder

b) der kationischen Erdalkalimetallkomplexe der Formel II

$$- [D \rightarrow M - R]^{+} X^{-} \qquad (II),$$

wobei

M: Ca, Sr oder Ba,

L: ein polymerisationsinaktiver Ligand,

R: ein Carbanion als polymerisationsaktiver Ligand,

D: ein Donorligand und

X: ein nicht koordinierendes Anion

bedeuten.

Gegebenenfalls an das Erdalkalimetall M koordinierte Lösungsmittel, wie Tetrahydrofuran, oder heteroatomtragende Gruppen im Liganden R sind in der Formeln (I+II) zur Vereinfachung nicht dargestellt.

Weiterhin wurde ein Verfahren zur Herstellung der Polymerisationsinitiatoren und Verfahren zur anionischen Polymerisation in Gegenwart der Polymerisationsinitiatoren gefunden.

Als heteroleptische Erdalkalimetallverbindung werden solche mit zwei unterschiedlichen Liganden am Erdalkalimetall bezeichnet.

Als Polymerisationsinitiator eignet sich auch eine Mischung aus zwei oder mehreren Erdalkalimetallverbindungen der Formel I oder II.

Die Polymerisationsinitiatoren können zusätzlich Erdalkalimetallverbindungen der Formeln III und IV enthalten:

$$L - M - L \qquad (III)$$

$$R - M - R \qquad (IV),$$

wobei L, M und R die in Anspruch 1 genannte Bedeutung haben.

Zur stereoselektiven, anionischen Polymerisation sind heteroleptische Erdalkalimetallverbindungen notwendig, welche einen polymerisationsaktiven Rest und einen zweiten, sterisch dirigierenden Liganden besitzen. Diese Verbindungen stehen durch Ligandaustausch im sogenannten Schlenk-Gleichgewicht mit den jeweiligen homoleptischen Komplexen:

$$L - M - L \quad + \quad R - M - R \rightleftharpoons L - M - R$$

Die Lage des Schlenk-Gleichgewichtes läßt sich durch folgende Gleichung bestimmen:

$$K = \frac{[L\text{-}M\text{-}R]^2}{[(L)_2M]*[(R)_2M]}$$

Zur stereoselektiven Polymerisation geeignete Komplexe müssen ein Schlenk-Gleichgewicht haben, welches überwiegend auf der Seite der heteroleptischen Komplexe liegt und bei denen der Ligandaustausch langsam in Relation zur Polymerisation verläuft.

Für eine stereoselektive Polymerisation ist es vorteilhaft, wenn der Anteil der Erdalkalimetallverbindung der Formel IV höchstens 10 mol-%, bevorzugt 0 bis 1 mol-%, bezogen auf die Summe aller Erdalkaliverbindungen, beträgt.

Der polymerisationsinaktive Ligand L besitzt im allgemeinen eine niedrigere Basizität als Polystyryllithium. Bevorzugt liegt der pKa-Wert des Liganden unter 30, insbesondere unter 20.

Als polymerisationsinaktive Liganden L eignen sich beispielsweise cyclische oder offenkettige Kohlenwasserstoffe mit delokalisiertem Elektronensystem, bei denen ein oder mehrere CH-Fragmente durch isoelektronische Fragmente ersetzt sein können, über Heteroatome gebundene sterisch gehinderte Kohlenwasserstoffe oder über ein Halogen gebundene Cluster.

Beispiele für cyclische Kohlenwasserstoffe mit delokalisiertem Elektronensystem sind unsubstituierte oder ein oder mehrfach substituierte Cyclopentadienyle, Indenyle, Fluorenyle, Fulvalendiyle oder Hydropentalenyle. Die Substituenten können Alkyle, bevorzugt $C_1$- bis $C_{10}$-Alkyl, 5- bis 7-gliedriges Cycloalkyl, das seinerseits ein $C_1$ bis $C_{10}$-Alkyl als Substituent tragen kann, $C_6$- bis $C_{15}$-Aryl oder Arylalkyl sein. Als Substituenten eigenen sich auch Gruppen mit Heteroatomen wie Silane, Amine, Phosphane, Arsane, Stilbane. Bevorzugte Heteroatome tragende Gruppen als Substituenten sind Trialkylsilyle, insbesondere Trimethylsilyl.

Ein oder mehrere CH-Fragmente der cyclischen Kohlenwasserstoffe können auch durch isoelektronische N oder P oder S-Fragmente ersetzt sein, z.B. Pyrrolylanion $C_4H_4N^-$, Phosphacyclopentadien $C_4H_4P^-$ oder Arsacyclopentadien $C_4H_4As^-$. Geeignete polymerisationsinaktive Liganden sind auch anionische Bor-Heterocyclen wie Diborolenyl oder Borinat. Bevorzugte cyclische Kohlenwasserstoffe sind Cyclopentadienyl, Methylcyclopentadienyl, Ethylcylopentadienyl, n-Butylcycopentadienyl, Pentamethylcyclopentadienyl, Trimethylsilylcyclopentadienyl, Indenyl und Fluorenyl.

Zwei gleiche oder verschiedene cyclische Kohlenwasserstoffe können auch über eine Alkyl-, Silyl oder Phosphoryl-Gruppe verbrückt sein. Bevorzugte verbrückte cyclische Kohlenwasserstoffe mit delokalisiertem Elektronensystem sind (Dimethylphenylsilyl)-tetramethylcyclopentadienyl.

Beispiele für offenkettige Kohlenwasserstoffe mit delokalisiertem Elektronensystem sind anionische 3-, 5- oder 7-gliedrige Kohlenwasserstoffe, bei denen gegebenenfalls ein oder mehrere $CH_2$-Fragmente durch isolektronische NR oder O und ein CH-Fragment durch N oder $R_2P$ ersetzt sein können. Bevorzugt eignen sich Pentadienyl oder Diphenylalkyle. Besonders bevorzugt wird Bis(4-methylbenzylid)diphenylphosphonium.

Über Heteroatome gebundene sterisch gehinderte Kohlenwasserstoffe als polymerisationsinaktiver Ligand L sind beispielsweise sterisch gehinderte Alkoxide oder Phenolate, Amide, Sulfide oder Phosphide. Als sterisch gehinderte Reste kommen tert-Butyl, Dimethylphenyl, Di-tert-butylphenyl, Diphenylphenyl in Frage.

Als polymerisationsaktiver Ligand R kommen Carbanionen mit einem pKa-Wert über 30, bevorzugt über 40, in Frage. Bevorzugte polymerisationsaktive Liganden sind Carbanionen der Formel $R^1R^2R^3C$oder $R^1(R^2R^3C)C^-$, wobei $R^1$, $R^2$ und $R^3$ gleiche oder verschiedene Reste sein können und jeweils für Wasserstoff, Alkyle wie Methyl, Ethyl, n-Propyl, iso-Propyl, n-Butyl, iso-Butyl, tert-Butyl, Pentyl, Hexyl, Heptyl, Octyl, Nonyl, Dodecyl, Octadecyl, Aryle, wie phenyl oder substituierte Phenyle, wie 3,5-Dimethylphenyl, p-t-Butylphenyl, p-Octylphenyl, p-Dodecylphenyl, o-, m-, p-Tolyl, Biphenyl, Naphthyl, Arylalkyle, wie Benzyl, Phenylethyl, 2-Phenylpropyl, 6-Phenylhexyl, p-Methylphenylethyl, p-t-Amylbenzyl, Alkenyle, wie Vinyl, Allyl, 3-Butenyl, 4-Hexenyl, Cycloalkyle wie Cyclopropyl, Cyclobutyl, Cyclopentyl,

Cyclohexyl, Cyclooctyl, Cycloalkenyle wie Cyclohexenyl oder Cyclooctenyl stehen. Die Reste $R^1$, $R^2$ und $R^3$ können aber auch $NR^1R^2$, $OR^1$, $SiR^1R^2R^3$, $SR^1$, $PR^1R^2$ bedeuten, wobei die an das Heteroatom gebundenen Reste $R^1$, $R^2$, $R^3$ die gleiche Bedeutung wie oben genannt haben. Die Reste $R^1$, $R^2$ oder $R^3$ können auch cyclisch miteinander verbunden sein und cycloaliphatische oder aromatische Ringe bilden. Die polymerisationsaktiven Liganden R können auch funktionelle Gruppen tragen, die sich inert gegenüber der Metall-Kohlenstoffbindung verhalten. Beispiele für inerte Gruppen sind Trimethylsilyl-, Trimethylsiloxy-, Ether-, Dialkylamino- oder Cycloalkylaminogruppen. Bevorzugte polymerisationsaktive Liganden sind unsubstituiertes oder substituiertes Benzyl, Bis(trimethylsilyl)methyl, o,o-Dialkylphenyl, Allyl oder Alkenyl.

Die kationischen Erdalkalimetallkomplexe der Formel II enthalten einen ein- oder mehrzähnigen Donorliganden D. Beispiele hierfür sind ein- oder mehrzähniger Ether, Thioether, Amine oder Sulfide. Bevorzugt sind Chelatliganden mit zwei oder mehreren Sauerstoffoder Stickstoffatomen, wie Pentamethyldiethylentriamin (PMDTA).

Als nicht koordinierendes Anion X in Formel II kommen prinzipiell alle zuvor genannten polymerisationsinaktiven Liganden in der Form L- in Betracht, die durch den Donorliganden D verdrängt wurden. Weitere geeignete nichtkoordinierende Anionen sind z.B. unsubstituierte und Halogen- oder Halogenalkyl-substituierte Tetraphenylborate oder Carboranate. Beispiele hierfür sind Tetraphenylborat, Tetra(p-tolyl)borat, Tetra(o-tolyl)borat, Tetra(o,p-dimethylphenyl) borat, Tetra(m,m-dimethylphenyl)borat), Tetra(pentafluorphenyl)borat und Tetra(p-trifluoromethylphenyl)-borat.

Die heteroleptischen Erdalkalimetallverbindungen lassen sich z.B. herstellen durch Umsetzung einer Erdalkalimetallverbindung der Formel $R_2M$ mit einer Verbindung der Formel LH oder der Formel $L_2M$, wobei M, R und L die in Anspruch 1 genannte Bedeutung haben und H für Wasserstoff steht. Bei der Umsetzung einer Erdalkalimetallverbindung der Formel $R_2M$ mit einer Verbindung der Formel $L_2M$ steht die gebildete heteroleptische Verbindung mit den Ausgangsverbindungen im Schlenk-Gleichgewicht. Das Gleichgewicht läßt sich durch die Wahl des Liganden L steuern.

Bevorzugte Erdalkalimetallverbindungen der Formel $R_2M$ sind Dibenzylbarium, Bis(diphenylmethyl)barium, Bis-(1,1,3-triphenylpropyl)barium und Bis [(2-dimethylaminophenyl)(trimethylsilyl)-methyl]calcium. Zur Herstellung der erfindungsgemäßen heteroleptischen Erdalkalimetallverbindungen werden diese bevorzugt mit Dimethylphenyl(tetramethylcylopentadienyl)silan, (Diethylamino)dimethyl(tetramethylcylopentadienyl)silan oder 9-Trimethylsilylfluoren, als Verbindung der Formel LH, oder mit Bis[(dimethylphenylsilyl)tetramethylcyclopentadienyl)]barium, Bis[(diethylaminodimethylsilyl)tetramethylcyclopentadienyl)]barium, Bis[bis(4-methylbenzylid)diphenylphosphonium]barium, Bis(pentamethylcylopentadienyl)barium, Bis[(dimethylphenylsilyl)fluoren-9-yl]barium oder Bis[(dimethylphenylsilyl)tetramethylcyclopentadienyl]calcium, als bevorzugte Erdalkalimetallverbindungen der Formel $L_2M$ umgesetzt.

Die erfindungsgemäßen Polymerisationsinitiatoren eigenen sich zur Polymerisation von anionisch polymerisierbaren Monomeren, insbesondere von vinylaromatischen Monomeren oder Dienen, aber auch von Acrylaten, Methacrylaten, Acrylnitrilen oder Vinylchlorid. Hierzu werden die erfindungsgemäßen Polymerisationsinitiatoren in der Regel in Mengen im Bereich von 0,001 bis 5 mol-%, bezogen auf die zu polymerisierenden Monomeren, eingesetzt.

Bevorzugte Diene sind Butadien, Isopren, 2,3-Dimethylbutadien, 1,3-Pentadien, 1,3-Hexadiene oder Piperylen oder deren Mischungen.

Als vinylaromatische Monomere können beispielsweise Styrol, $\alpha$-Methylstyrol, p-Methylstyrol, Ethylstyrol, tert. -Butylstyrol, Vinyltoluol oder 1,1-Diphenylethylen oder Mischungen davon eingesetzt werden.

Besonders bevorzugt werden Butadien und Styrol verwendet.

Die Polymerisation erfolgt zweckmäßigerweise in einem aliphatischen oder aromatischen Kohlenwasserstoff oder Kohlenwasserstoffgemisch, bevorzugt in Benzol, Toluol, Ethylbenzol, Xylol, Cumol oder Cyclohexan. Besonders bevorzugt wird Cyclohexan oder Toluol verwendet. Die weiteren Verfahrensparameter sind für die Durchführung des Verfahrens nicht kritisch. Man kann in den für die anionische Polymerisation von Butadien und Styrol bekannten Temperatur- und Druckbereichen arbeiten.

Mit den erfindungsgemäßen Polymerisationsinitiatoren lassen sich Styrolpolymere mit hoher Syndiotaktizität und enger Molmassenverteilung herstellen. Beispielsweise kann eine Polydispersität D von maximal 2,5, vorzugsweise maximal 2, erreicht werden.

Aufgrund des lebenden Charakters können mit den erfindungsgemäßen Polymeristionsinitiatoren durch sequentielle Monomerzugabe Blockcopolymere unterschiedlicher Struktur hergestellt werden.

Mit den erfindungsgemäßen Polymerisationsinitiatoren können somit auch Blockcopolymere mit syndiotaktischen Blöcken aus vinylaromatischen Monomeren hergestellt werden, beispielsweise Styrol-Butadien-Styrol-Dreiblockcopolymere, die sich je nach Butadiengehalt als transparentes, schlagfestes Polystyrol oder thermoplastisches Elastomer mit erhöhter Wärmeformbeständigkeit eignen.

Bei gleichzeitiger Anwesenheit von vinylaromatischem Monomer und Dien lassen sich statistische Copolymere mit einem hohen Anteil an 1,4-Verknüpfungen bzw. einem niedrigen Anteil an 1,2-Verknüpfungen der Dienmonomeren herstellen.

Beispiele

Die in den Beispielen genannten Ausgangsverbindungen lassen sich beispielsweise wie folgt herstellen:

Tetramethylcyclopentadien nach Fendrick, C.M.; Schertz, L.D.; Day, V.W.; Marks, T.J. *Organornetallics* 1988, 7, 1828.

Bis(bis(trimethylsilyl)amid)calcium. $(THF)_2$ nach Westerhausen, M. *Inorg. Chem.* 1991, 30, 96.

Bis(bis(trimethylsilyl)amid)barium. $(THF)_2$ nach Vaartstra, B.A.; Huffmann, J.C.; Streib, W.E.; Caulton, K.G. *Inorg. Chem.* 1991, 30, 121.

2-$NMe_2$-α-$Me_3$Si-Benzyllithium nach Jastrzebski, J.T.B.H.; van Koten, G.; Knaap, C.T.; Schreurs, A.M.M.; Kroon, J.; Spek, A.L. *Organometallics* 1986, 5, 1551.

Bariumbis[bis(-4-methylbenzylid)diphenyl]phosphonium] nach Harder, S.; Lutz, M. *Organometallics* 1997, 16, 225.

Herstellung von Bis-(1,1,3-triphenylpropyl)barium * 2 Tetrahydrofuran:

Zu einer Lösung von 150 mg (0,47 mmol) Dibenzylbarium in 20 ml Tetrahydrofuran wurden 0,19 ml (1,07 mmol) 1,1-Diphenylethylen (DPE) bei 25°C zugegeben, worauf sich die rote Färbung der Lösung rasch vertiefte. Es wurde 14 Stunden weitergerührt und das Lösungsmittel im Hochvakuum entfernt. Zur weiteren Reinigung wurde das Produkt in 30 ml Benzol gelöst und von unlöslichen Bestandteilen abfiltriert. Das Filtrat wurde im Hochvakuum bis zur Trockene eingeengt und der schwarzviolette Rückstand mit 40 ml Pentan gewaschen. Die Charakterisierung erfolgte mittels $^1$H-NMR: 1,27 (m, 8H, THF), 2,67 (m, 4H, $CH_2$), 2.79 (m, 4H, $CH_2$), 3,22 (m, 8H, THF), 6,13 (t, 4H, para), 6,78 (t, 8H, meta), 6,84 (d, 8H, ortho), 7,20 (m, 10H, 3-Phenyl). (Alle Angaben in ppm gegenüber Tetramethylsilan als internem Standard).

Herstellung von THF-freiem Bis-(1,1,3-triphenylpropyl)barium

Zu einer Suspension von 1,78 g (5,58 mmol) Dibenzylbarium in 70 ml Ethylbenzol und 10 ml Tetrahydrofuran (THF) wurden 2,50 ml (14,15 mmol) 1,1-Diphenylethylen bei 25°C zugegeben. Nach 14-stündigem Rühren hatte sich eine tiefrote Lösung gebildet. Die Lösung wurde von geringen Mengen an unlöslichen Bestandteilen abfiltriert und anschließend bis zur Trockene eingeengt. Lösungsmittelfreies Bis-(1,1,3-triphenylpropyl)barium wurde zunächst als sehr zähes, rotviolettes Öl und nach längerem Trocknen als zäher Feststoff erhalten. Der Umsatz war nahezu quantitativ.

Die Charakterisierung erfolgte über $^1$H-NMR: 2,64 (m, 4H, $CH_2$), 2,70 (m, 4H, $CH_2$), 6,12 (t, 4H, para 1-Phenyl-H), 6,71 (m, 16H, meta + ortho 1-Phenyl-H), 7,17 (m, 10H, 3-Phenyl-H). (Alle Angaben in ppm gegenüber Tetramethylsilan als internem Standard).

Synthese von Dimethylphenyl(tetramethylcyclopentadienyl)silan

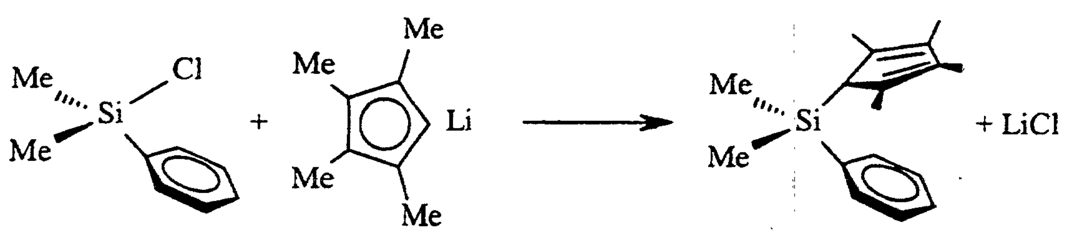

Zu einer Lösung von 5,4 g (44,2 mmol) Tetramethylcyclopentadien in 90 ml THF wurden bei -78°C 30 ml (48 mmol) n-Butyllithium (1,6 M in Hexan) innerhalb von etwa 20 Minuten zugetropft. Anschließend wurde 24 Stunden bei 25°C gerührt. Danach wurde die Lösung erneut auf -78°C abgekühlt, 8,3 g (48,6 mmol) Chlordimethylphenylsilan innerhalb von 15 Minuten zugetropft und 24 Stunden bei 25°C gerührt. Das THF wurde nun im Vakuum entfernt und der Rückstand in 50 ml Pentan aufgenommen. Der unlösliche Niederschlag wurde abfiltriert und das Pentan im Vakuum entfernt. Der gelbe flüssige Rückstand wurde im Hochvakuum destilliert. Das Produkt siedet bei 83 bis 85°C. Charakterisierung erfolgte durch $^1$H-NMR-Spektroskopie.

Ausbeute: 7,50 g (29,2 mmol) entspricht 66 %

Tabelle 1:

| $^1H$-NMR von Dimethylphenyl(tetramethylcyclopentadienyl)silan in $C_6D_6$ | | |
|---|---|---|
| chem. Versch. (ppm) | Intensität, Aufspaltung | Zuordnung |
| 0,16 | 6 H, s | $SiMe_2$ |
| 1,76 | 12 H, s | 4x Cp-$CH_3$ |
| 2,99 | 1 H, bs | Cp-$sp^3$-H |
| 7,15 - 7,21<br>7,38 - 7,41 | 5 H, 2x m | Phenyl-H |

Synthese von Bis[(dimethylphenylsilyl)tetramethylcyclopentadienyl]calcium.THF

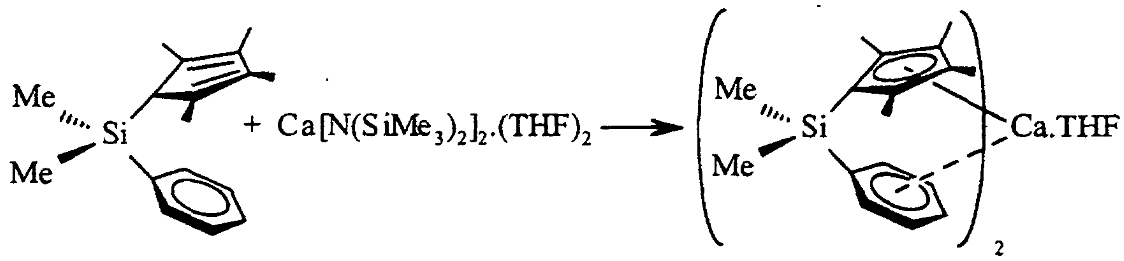


Es wurden 1,02 g (3,98 mmol) Dimethylphenyl(tetramethylcyclopentadienyl)silan und 1,00 g (1,98 mmol) Bis(bis(trimethylsilyl)amid)calcium.$(THF)_2$ in 20 ml Toluol gelöst und 30 Minuten bei 55°C gerührt. Anschließend wurde das Lösungsmittel bei 55°C im Vakuum entfernt. Der Rückstand wurde 1 Stunde bei 55°C im Vakuum getrocknet und danach mit 30 ml Pentan gewaschen. Bis[(dimethylphenylsilyl)tetramethylcyclopentadienyl]calcium wurde als farbloses Pulver erhalten. Charakterisierung erfolgte durch $^1H$-NMR-Spektroskopie.

Ausbeute: 0,60 g (0,96 mmol) entspricht 49 %

Tabelle 2:

| $^1H$-NMR von Bis[(dimethylphenylsilyl)tetramethylcyclopentadienyl]calcium.THF in $C_6D_6$ | | |
|---|---|---|
| chem. Versch. (ppm) | Intensität, Aufspaltung | Zuordnung |
| 0.59 | 12 H, s | $SiMe_2$ |
| 1,13 | 4 H, m | THF |
| 2,07 | 12 H, s | 2x Cp-$CH_3$ |
| 2,13 | 12 H, s | 2x Cp-$CH_3$ |
| 3,07 | 4 H, m | THF |
| 7,16 - 7,20 | 6 H, m | meta- + para-Phenyl |
| 7,55 | 4 H, d | ortho-Phenyl |

Synthese von Bis[(dimethylphenylsilyl)tetramethylcyclopentadienyl]barium

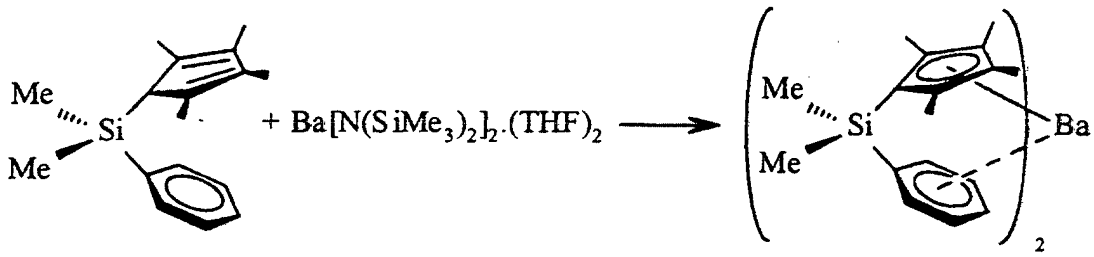

Es wurden 2,28 g (8,9 mmol) Dimethylphenyl(tetramethylcyclopentadienyl)silan und 2,68 g (4,45 mmol) Bis (bis(trimethylsilyl)-amid)barium. $(THF)_2$ in 20 ml Toluol gelöst und 1 Stunde bei 60°C gerührt. Anschließend wurde das Lösungsmittel bei 60°C im Vakuum entfernt. Der Rückstand wurde 1 Stunde bei 60°C im Vakuum getrocknet und danach mit 30 ml Pentan gewaschen. Bis[(dimethylphenylsilyl)tetramethylcyclopentadienyl]barium wurde als farbloses Pulver erhalten. Charakterisierung erfolgte durch $^1$H-NMR-Spektroskopie.

Tabelle 3:

| $^1$H-NMR von Bis[(dimethylphenylsilyl)tetramethylcyclopentadienyl]Barium in $C_6D_6$ | | |
|---|---|---|
| chem. Versch. (ppm) | Intensität, Aufspaltung | Zuordnung |
| 0,59 | 12 H, s | $SiMe_2$ |
| 1,95 | 12 H, s | 2x Cp-$CH_3$ |
| 2,00 | 12 H, s | 2x Cp-$CH_3$ |
| 6,99 - 7,08 | 10 H, bm | Phenyl-H |

Synthese von 2-$NMe_2$-α-$Me_3$Si-Benzylkalium

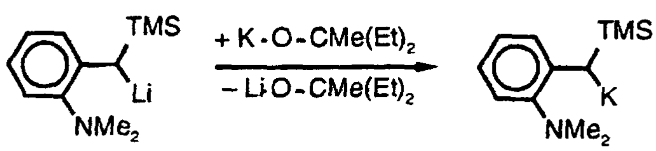


Ein Gemisch von 2-$NMe_2$-α-$Me_3$Si-Benzyllithium (2,08 g; 9,75 mmol) und Kalium(2-Me-pentanolat) (1,50 g; 10,69 mmol) wurde in Diethylether gelöst und die Lösung 10 Minuten gerührt. Die entstandene orangefarbene Lösung wurde im Vakuum eingeengt. Das resultierende Öl wurde drei Mal mit 20 ml Hexan gewaschen und ergab 2-$NMe_2$-α-$Me_3$Si-Benzylkalium als ein gelbes Pulver, welches für 30 Minuten im Hochvakuum bei 15°C getrocknet wurde. Ausbeute: 1,99 g (83 %).

Tabelle 4:

| $^1$H-NMR von 2-$NMe_2$-α-$Me_3$Si-Benzylkalium in $C_6D_6$ + THF-$d_8$ | | |
|---|---|---|
| Chem. Versch. (ppm) | Intensität, Aufspaltung | Zuordnung Zuordnung |
| 0,37 | 9 H, s | $SiMe_3$ |
| 1,92 | 1 H, s | CH(K) |
| 2,53 | 6 H, s | $NMe_2$ |
| 5,77 | 1 H, t (6,9 Hz) | Phenyl-H |
| 6,49 - 6,62 | 3 H, m | Phenyl-H |

Synthese von Bis(2-$NMe_2$-α-$Me_3$Si-benzyl)calcium. $(THF)_2$

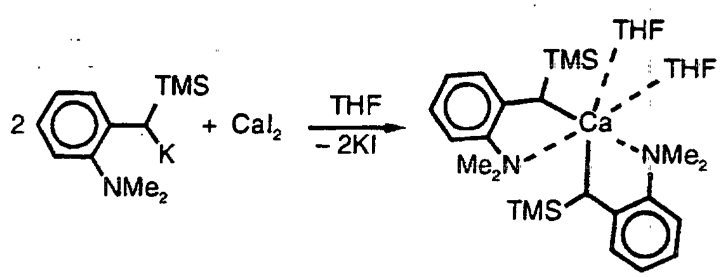


Ein Gemisch von 2-$NMe_2$-α-$Me_3$Si-Benzylkalium (3,81 g; 15,52 mmol) und $CaI_2$ (2,20 g; 7,49 mmol) in 20 ml THF wurde 40 Stunden gerührt. Die Mutterlauge des Reaktionsgemisches wurde mittels Centrifugation isoliert. Der Rückstand des Reaktionsgemisches wurde nochmals mit 20 ml Benzol extrahiert. Einengen der gesamten THF- und Benzollösungen ergab einen orange-roten klebrigen Feststoff, welcher aus einem Gemisch von warmem Hexan (40 ml) und THF (15 ml) umkristallisiert wurde. Abkühlen bis -20°C gab eine gelbliche kristalline Verbindung der Zusammensetzung: Bis(2-$NMe_2$-α-$Me_3$Si-Benzyl)Calcium. $(THF)_2$. Ausbeute: 2,75 g; 65 %.

Tabelle 5:

| $^1$H-NMR von Bis(2-$NMe_2$-α-$Me_3$Si-benzyl)calcium. $(THF)_2$ in THF-$d_8$ | | |
|---|---|---|
| chem. Versch. (ppm) | Intensität, Aufspaltung | Zuordnung Zuordnung |
| 0,08 | 9 H, s | $SiMe_3$ |
| 0,88 | 1 H, s | CH(Ca) |
| 1,78 | 8 H, m | THF |
| 2,49 | 6 H, sb | $NMe_2$ |
| 3,63 | 8 H, m | THF |
| 6,18 | 1 H, t (7,0 Hz) | Aryl-H |
| 6,67 | 1 H, t (7,0 Hz) | Aryl-H |
| 6,75 - 6,85 | 2 H, m | Aryl-H |

Tabelle 6:

| $^1$H-NMR von Bis(2-$NMe_2$-α-$Me_3$Si-benzyl)calcium. $(THF)_2$ in Toluol-$d_8$ (600 MHz) (Zwei Diastereomere) | | |
|---|---|---|
| chem. Versch. (ppm) | Intensität, Aufspaltung | Zuordnung Zuordnung |
| 0,34 und 0,45 | 9 H, s | $SiMe_3$ |
| 0,90 und 1,24 | 1 H, s | CH(Ca) |
| 1,25 | 8 H, m | THF |
| 2,25 - 2,60 | 6 H, einige sehr breite Signale | $NMe_2$ |
| 3,19 | 8 H, m | THF |
| 6,26 und 6,38 | 1 H, t (7,2 Hz) | Aryl-H |
| 6,55 und 6,72 | 1 H, d (7,2 Hz) | Aryl-H |
| 6,84 und 6,89 | 1 H, t (7,2 Hz) | Aryl-H |
| 7,12 und 7,18 | 1 H, d (7,2 Hz) | Aryl-H |

Beispiel 1

Synthese und NMR-Nachweis eines reinen heteroleptischen L-Ca-R Komplexes

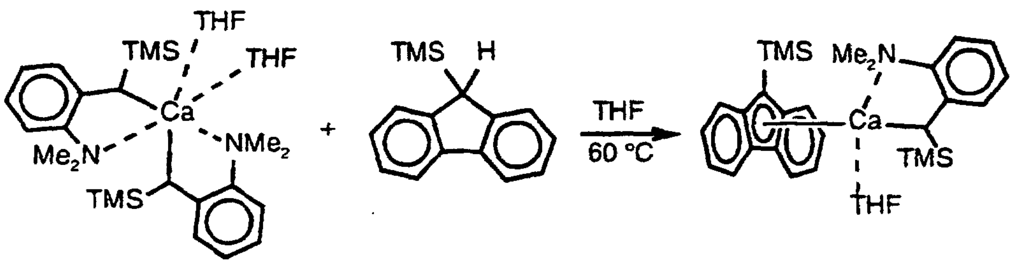


Bis(2-$NMe_2$-α-$Me_3$Si-benzyl)calcium. $(THF)_2$ und 9-$Me_3$Si-Fluoren wurden in equimolaren Mengen gemischt und in THF gelöst. Dieses Reaktionsgemisch wurde eine halbe Stunde auf 60°C erhitzt und anschließend im Vakuum eingeengt. Der resultierende Feststoff wurde eine halbe Stunde im Hochvakuum bei 60°C getrocknet. NMR-Analyse des Rohproduktes in Benzol zeigt einen sauberen Komplex der Zusammensetzung (9-$Me_3$Si-fluorenyl) (2-$NMe_2$-α-$Me_3$Sibenzyl)Ca.THF. Das Schlenkgleichgewicht liegt vollständig auf der heteroleptischen Seite.

Tabelle 7:

| $^1$H-NMR von (9-$Me_3$Si-fluorenyl)(2-$NMe_2$-α-$Me_3$Si-benzyl)Ca.THF in $C_6D_6$ (600 MHz) | | |
|---|---|---|
| chem. Versch. (ppm) | Intensität, Aufspaltung | Zuordnung |
| 0,34 | 1 H, s | CH(Ca) |
| 0,42 | 9 H, s | $SiMe_3$(benzyl) |
| 0,59 | 9 H, s | $SiMe_3$(fluorenyl) |
| 0,95 | 4 H, mb | THF |
| 1,93 und 1,96 | 6 H, 2x s | $NMe_2$ |
| 2,59 | 4 H, mb | THF |
| 6,12 | 1 H, t (7,5 Hz) | Benzyl |
| 6,27 | 1 H, d (7,8 Hz) | Benzyl |
| 6,31 | 1 H, t (7,5 Hz) | Benzyl |
| 6,88 | 1 H, d (8,4 Hz) | Benzyl |
| 7,04 | 1 H, t (7,5 Hz) | Fluorenyl |
| 7,09 | 1 H, t (7,5 Hz) | Fluorenyl |
| 7,24 | 1 H, t (7,2 Hz) | Fluorenyl |
| 7,31 | 1 H, t (7,5 Hz) | Fluorenyl |
| 7,93 | 1 H, d (7,8 Hz) | Fluorenyl |
| 8,03 | 1 H, d (8,4 Hz) | Fluorenyl |
| 8,14 | 1 H, d (8,4 Hz) | Fluorenyl |
| 8,17 | 1 H, d (7,8 Hz) | Fluorenyl |

Alle Signale wurden eindeutig zugeordnet mit Hilfe zweidimensionaler ROESY und DQF-COSY NMR Techniken. Ein 2D-ROESY Spektrum zeigt auch eindeutig Kreuzsignale zwischen 9-$Me_3$Si-Fluorenyl- und 2-$NMe_2$-α-$Me_3$Si-Benzyl-Gruppen, und belegt damit die Existenz eines heteroleptischen Calcium-Komplexes in Lösung. Die Tatsache, daß alle Protonen der 9-$Me_3$Si-Fluorenylgruppe chemisch verschieden sind, zeigt einen langsamen Austausch zwischen den zwei verschiedenen Enantiomeren der chiralen 2-$NMe_2$-α-$Me_3$Si-Benzylgruppe. Entweder Temperaturerhöhung oder Zugabe von THF beschleunigt diesen Enantiomeren-Austausch und führt zur Koaleszens der Signale der 9-$Me_3$Si-Fluorenylgruppe.

Herstellung von Mischungen

Beispiel 2

Umsetzung von Bis-(1,1,3-triphenylpropyl)barium.$(THF)_2$ mit Bis[(dimethylphenylsilyl)tetramethylcyclopentadienyl]barium in $C_6D_6$

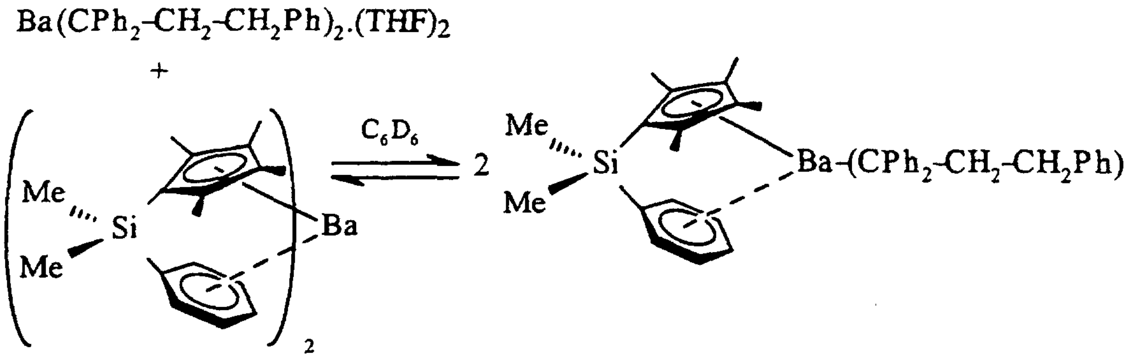


In einem NMR-Röhrchen wurden etwa 10 mg Bis[(dimethylphenylsilyl)tetramethylcyclopentadienyl]barium in 0,5 ml $C_6D_6$ aufgelöst und hierzu in Abständen von 1 bis 2 Stunden portionsweise Bis-(1,1,3-triphenylpropyl)barium zugegeben. Unmittelbar vor weiterer Komplexzugabe wurden bei 25°C $^1$H-NMR-Spektren der Reaktionslösung gemessen.

Auswertung: Bei einem Überschuß an Chelatligand wurden im NMR-Spektrum zwei getrennte Signalsätze für den Chelatliganden gefunden. Ein Signalsatz entsprach dem NMR-Daten von Bis[(dimethylphenylsilyl)tetramethylcyclopentadienyl]barium und der andere konnte dem heteroleptischen Komplex zugeordnet werden. Für den Alkylliganden wurde selbst bei Überschuß keine Trennung der Signale detektiert. Anhand der Integrale wurden die Molverhältnisse der Komplexe ermittelt und die Gleichgewichtskonstante für das Schlenk-Gleichgewicht berechnet. Der Anteil des Bis-(1,1,3-triphenylpropyl)bariumkomplexes konnte nicht direkt ermittelt werden. Hier wurde aus den Signalen des Chelatliganden der Anteil des heteroleptischen Komplexes bestimmt und von der Gesamtintensität der Signale des Triphenylpropylliganden abgezogen.

K(Schlenk-GG) = 19±5

Der relativ große Fehler ist bedingt durch die Ungenauigkeiten bei der Integralbestimmung, da sich die Signale teilweise überlagerten. Aber das Ergebnis zeigt, daß das Gleichgewicht stark auf der Seite des heteroleptischen Komplexes liegt. Weiterhin ist der Austausch des Chelatliganden so langsam, daß die einzelnen Komplexe im NMR-Spektrum getrennt sichtbar sind.

Tabelle 8:

| Vergleich der NMR-Daten von Biscyclopentadienyl- und heteroleptischem Komplex: | | | | |
|---|---|---|---|---|
| | $SiMe_2$ | Cp-$CH_3$ | Cp-$CH_3$ | Phenyl |
| Bis-Cp-Komplex | 0,59 | 1,95 | 2,00 | 6,99-7,08 |
| Heterol. Komplex | 0,64 | 2,00 | 2,15 | * |

* Überlagerung mit anderen Signalen

Beispiel 3

Umsetzung von THF-freiem Bis-(1,1,3-triphenylpropyl)barium mit Bis[bis(4-methylbenzylid)diphenyl]phosphonium]Barium in $C_6D_6$

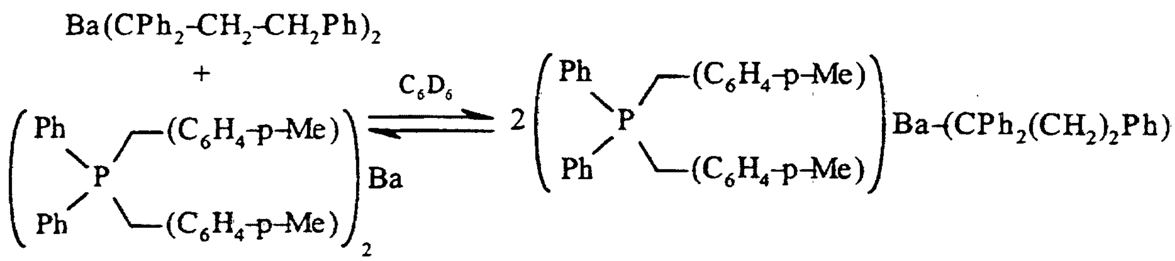


In einem NMR-Röhrchen wurden etwa 10 mg Bariumbis[bis(4-methylbenzylid)diphenyl]phosphonium] in 0,5 ml $C_6D_6$ aufgelöst und hierzu in Abständen von 1 bis 2 Stunden portionsweise THFfreies Bis-(1,1,3-triphenylpropyl) barium zugegeben. Unmittelbar vor weiterer Komplexzugabe wurden bei 25°C $^1$H-NMR-Spektren der Reaktionslösung gemessen.

Auswertung: Auch hier waren bei einem Überschuß an Chelatligand im NMR-Spektrum zwei getrennte Signalsätze für den Chelatliganden zu sehen, einer für den Bariumbisphosphonium-Komplex und einen für den heteroleptischen Komplex. Für den Alkylliganden war ebenfalls, selbst bei Überschuß, keine Trennung der Signale zu beobachten. Anhand der Integrale wurden die Molverhältnisse der Komplexe ermittelt und die Gleichgewichtskonstante für das Schlenk-Gleichgewicht berechnet. Auch hier konnte der Anteil des Bis-(1,1,3-triphenylpropyl)bariumkomplexes nur indirekt bestimmt werden.

$$K(\text{Schlenk-GG}) = 2{,}2 \pm 0{,}5$$

Auch bei diesem Komplexsystem ist der heteroleptische Komplex bevorzugt. Allerdings ist die Gleichgewichtskonstante viel kleiner und das Gleichgewicht damit nicht so stark auf der linken Seite, wie im oberen Beispiel. Der Austausch des Phosphoniumliganden erfolgte ebenfalls sehr langsam und ergab deshalb getrennte Signale im NMR-Spektrum.

Tabelle 9:

| Vergleich der NMR-Daten von Bisphosphonium- und heteroleptischem Komplex in $C_6D_6$ | | | | | | |
|---|---|---|---|---|---|---|
| | p-Me | CH | Tolyl | Tolyl | m,p-Ph | o-Ph |
| Bisphosphoniumk. | 2, 04 (s) | 2, 92 (d 18Hz) | 6,51 bs | 6,72 bs | 6,99 bm | 7,91 bm |
| heterol. Komplex | 2,08 | 3,09 | * | * | * | 7,87 |

* Überlagerung mit anderen Signalen

Polymerisationsbeispiele

Allgemeines zu den Polymerisationen

Die Polymerisationen wurden in einem 250 ml Edelstahlautoklaven unter Argonatmosphäre und unter strengem Ausschluß von Luft und Feuchtigkeit ausgeführt.

Das verwendete Cyclohexan wurde nach üblichen Methoden über Calciumhydrid getrocknet und anschließend durch 3 Stunden Rückflußkochen mit einer Mischung von n-Butyllithium (1,6 M in Hexan, 2 ml pro Liter Lösungsmittel) und 1,1-Diphenylethylen (0,5 ml/l) nachgereinigt.

Styrol wurde jeweils kurz vor der Polymerisation unter Argonatmosphäre bei 12 mbar destilliert und über Aluminiumoxidperlen unter Argon gelagert.

Beispiel 4

Polymerisation von Styrol mit Bis-[(2-dimethylaminophenyl)-(trimethylsilyl)methyl]calcium.$(THF)_2$ in Cyclohexan bei 60°C

115 ml Cyclohexan wurden bei 59,6°C mit Initiatorlösung (0,05 mol/l Bis-[(2-dimethylaminophenyl)(trimethylsilyl)methyl]-calcium.$(THF)_2$ in Cyclohexan) bis zur beginnenden Gelbfärbung austitriert und anschließend mit 1 ml

Initiatorlösung versetzt. Anschließend wurde eine Lösung von 11,5 ml (0,1 mol) Styrol in etwa 5 ml Cyclohexan bei 25°C ebenfalls bis zur beginnenden Gelbfärbung mit Initiatorlösung austitriert, rasch zum Initiator zugegeben und bei einer Temperatur von etwa 60°C polymerisiert. Die Temperatur stieg während der Polymerisation innerhalb von 5 Minuten auf 61,1°C an und sank nach etwa 25 Minuten wieder auf 59,6°C ab. Nach 100 Minuten wurde die Reaktion mit Methanol abgebrochen. Das Lösungsmittel wurde entfernt und das erhaltene Polystyrol bei 120°C zwei Stunden im Hochvakuum getrocknet. Die Analyse der Molekulargewichtsverteilung erfolgte durch GPC. Die Taktizität des Polystyrols wurde mittels $^{13}C$-NMR-Spektroskopie in Tetrachlordideuteroethan bei 377 K ermittelt.
$M_N$ = 119000 g/mol, $M_W$ = 184000 g/mol, D = 1.54

$^{13}C$-NMR: ataktisches Polystyrol

Beispiel 5

Polymerisation von Styrol mit einer Mischung von Bis-[(2-dimethylaminophenyl)(trimethylsilyl)methyl]calcium.$(THF)_2$ und Bis[(dimethylphenylsilyl)tetramethylcyclopentadienyl]calcium (2:1) in Cyclohexan bei 60°C

120 ml Cyclohexan wurden bei 60°C mit Initiatorlösung (0,05 mol/l Bis-[(2-dimethylaminophenyl)(trimethylsilyl)methyl]calcium*$THF_2$ in Cyclohexan) bis zur beginnenden Gelbfärbung austitriert und anschließend mit 1 ml Initiatorlösung, sowie 2 ml einer Lösung von Bis[(dimethylphenylsilyl)tetramethylcyclopentadienyl]calcium (0,05 mol/l in Ethylbenzol) versetzt. Nach 10 Minuten wurde eine Lösung von 11,5 ml (0,1 mol) Styrol in etwa 10 ml Cyclohexan bei 25°C ebenfalls bis zur beginnenden Gelbfärbung mit Initiatorlösung austitriert, rasch zur Initiatormischung zugegeben und bei einer Temperatur von etwa 60°C polymerisiert. Die Temperatur stieg während der Polymerisation innerhalb von 10 Minuten auf 60,8°C an und sank nach etwa 30 Minuten wieder auf 60°C ab. Nach 100 Minuten wurde die Reaktion mit Methanol abgebrochen. Das Lösungsmittel wurde entfernt und das erhaltene Polystyrol bei 120°C zwei Stunden im Hochvakuum getrocknet. Die Analyse der Molekulargewichtsverteilung erfolgte durch GPC. Die Taktizität des Polystyrols wurde mittels $^{13}C$-NMR-Spektroskopie in Tetrachlordideuteroethan bei 377 K ermittelt.
$M_N$ = 110000 g/mol, $M_w$ = 220000 g/mol, D = 2,00

$^{13}C$-NMR: Der Anteil an rr- und mr-Triaden betrug 83 %, der Anteil an mm-Triaden betrug 17 %. Eine getrennte Bestimmung der rr- und mr-Triaden war aufgrund von Signalüberlagerungen nicht möglich

Beispiel 6

Polymerisation von Styrol mit einer Mischung von Bis-[(2-dimethylaminophenyl)(trimethylsilyl)methyl)calcium. $(THF)_2$ und Bis[(dimethylphenylsilyl)tetramethylcyclopentadienyl]calcium (4:1) in cyclohexan bei 60°C

120 ml Cyclohexan wurden bei 60°C mit Initiatorlösung (0,05 mol/l Bis-[(2-dimethylaminophenyl)(trimethylsilyl)methyl]calcium. $(THF)_2$ in Cyclohexan) bis zur beginnenden Gelbfärbung austitriert und anschließend mit 1 ml Initiatorlösung, sowie 4 ml einer Lösung von Bis[(dimethylphenylsilyl)tetramethylcyclopentadienyl]calcium (0,05 mol/l in Ethylbenzol) versetzt. Nach 10 Minuten wurde eine Lösung von 11,5 ml (0,1 mol) Styrol in etwa 10 ml Cyclohexan bei 25°C ebenfalls bis zur beginnenden Gelbfärbung mit Initiatorlösung austitriert, rasch zur Initiatormischung zugegeben und bei einer Temperatur von etwa 60°C polymerisiert. Die Temperatur stieg während der Polymerisation innerhalb von 20 Minuten auf 60,4°C an und sank nach etwa 20 Minuten wieder auf 60°C ab. Nach 140 Minuten wurde die Reaktion mit Methanol abgebrochen. Das Lösungsmittel wurde entfernt und das erhaltene Polystyrol bei 120°C zwei Stunden im Hochvakuum getrocknet. Die Analyse der Molekulargewichtsverteilung erfolgte durch GPC. Die Taktizität des Polystyrols wurde mittels $^{13}C$-NMR-Spektroskopie in Tetrachlordideuteroethan bei 377 K ermittelt.
$M_N$ = 95000 g/mol, $M_W$ = 214000 g/mol, D = 2,26

$^{13}C$-NMR: Der Anteil an rr- und mr-Triaden betrug 91 %, der Anteil an mm-Triaden betrug 9 %. Eine getrennte Bestimmung der rr- und mr-Triaden war aufgrund von Signalüberlagerungen nicht möglich.

Beispiel 7

Polymerisation von Styrol mit [(2-Dimethylaminophenyl)-(trimethylsilyl)methyl] [α-trimethylsilyl-fluorenyl]calcium in Masse bei 25°C

In einem 250-ml-Edelstahlautoklaven wurden 100 ml Styrol vorgelegt und bei 25°C mit 1,2 ml einer 0,1 normalen Lösung von [(2-Dimethylaminophenyl)-(trimethylsilyl)methyl] [α-trimethylsilyl-fluorenyl)calcium (Beispiel 1) in

Benzol versetzt. Die Temperatur stieg während der Polymerisation um nicht mehr als 3°C an. Nach 30 Minuten wurde die Reaktion mit Methanol abgebrochen. Das erhaltene Polystyrol wurde eine Stunde im Hochvakuum bei 120°C getrocknet, in THF gewaschen und erneut zwei Stunden im Hochvakuum bei 120°C getrocknet um nicht umgesetztes Styrol zu entfernen. Die Analyse der Molekulargewichtsverteilung erfolgte durch GPC. Die Taktizität des Polystyrols wurde mittels $^{13}$C-NMR-Spektroskopie in Tetrachlordideuteroethan bei 377 K ermittelt.
$M_N$ = 467900 g/mol, $M_W$ = 1005000 g/mol, D = 2,47

$^{13}$C-NMR : Der Anteil der jeweiligen Triaden betrug

| | |
|---|---|
| mm | 5 % |
| mr | 27 % |
| rr | 68 % |

**Patentansprüche**

**1.** Polymerisationsinitiator, enthaltend eine Erdalkalimetallverbindung ausgewählt aus der Gruppe

a) der heteroleptischen Erdalkalimetallverbindungen der Formel I

$$L - M - R \qquad (I)$$

oder

b) der kationischen Erdalkalimetallkomplexe der Formel II

$$[D \rightarrow M - R]^{+} X^{-} \qquad (II),$$

wobei

M: Ca, Sr oder Ba,

L: ein polymerisationsinaktiver Ligand,

R: ein Carbanion als polymerisationsaktiver Ligand,

D: ein Donorligand und

X: ein nicht koordinierendes Anion

bedeuten.

**2.** Polymerisationsinitiator nach Anspruch 1 enthaltend eine Mischung aus zwei oder mehreren Erdalkalimetallverbindungen der Formel I oder II.

**3.** Polymerisationsinitiator nach Anspruch 1 oder 2, enthaltend zusätzlich Erdalkalimetallverbindungen der Formeln III und IV:

$$L - M - L \qquad (III)$$

$$R - M - R \qquad (IV),$$

wobei L, M und R die in Anspruch 1 genannte Bedeutung haben.

4. Polymerisationsinitiator nach Anspruch 3, **dadurch gekennzeichnet, daß** der Anteil der Erdalkalimetallverbindung der Formel IV höchstens 10 mol-%, bezogen auf die Summe aller Erdalkalimetallverbindungen, beträgt.

5. Polymerisationsinitiator nach einem der Ansprüche 1 bis 4, **dadurch gekennzeichnet, daß** der polymerisationsinaktive Ligand L eine niedrigere Basizität als Polystyryllithium besitzt.

6. Polymerisationsinitiator nach einem der Ansprüche 1 bis 5, **dadurch gekennzeichnet, daß** der polymerisationsinaktive Ligand L

   a) ein cyclischer oder offenkettiger Kohlenwasserstoff mit delokalisiertes Elektronensystem, bei dem ein oder mehrere CH-Fragmente durch isoelektronische Fragmente ersetzt sein können,

   b) ein über ein Heteroatom gebundener sterisch gehinderter Kohlenwasserstoff oder

   c) ein über ein Halogen gebundener Cluster bedeutet.

7. Polymerisationsinitiator nach einem der Ansprüche 1 bis 6, **dadurch gekennzeichnet, daß** der Donorligand D ein ein- oder mehrzähniger Ether, Thioether, Amin oder Sulfid bedeutet.

8. Polymerisationsinitiator nach einem der Ansprüche 1 bis 7, **dadurch gekennzeichnet, daß** das nicht koordinierende Anion X Tetraphenylborat bedeutet.

9. Verfahren zur Herstellung eines Polymerisationsinitiators gemäß einem der Ansprüche 1 bis 8, **dadurch gekennzeichnet, daß** man eine Erdalkalimetallverbindung der Formel $R_2M$ mit einer Verbindung der Formel LH oder der Formel $L_2M$ umsetzt, wobei M, R und L die in Anspruch 1 genannte Bedeutung haben und H für Wasserstoff steht.

10. Verfahren zur Polymerisation von anionisch polymerisierbaren Monomeren, **dadurch gekennzeichnet, daß** man die Polymerisation in Gegenwart eines Polymerisationsinitiators gemäß einem der Ansprüche 1 bis 9 durchführt.

## Claims

1. A polymerization initiator comprising an alkaline earth metal compound chosen from the group

   a) of heteroleptic alkaline earth metal compounds of the formula I

$$L - M - R \qquad (I)$$

   or

   b) of cationic alkaline earth metal complexes of the formula II

$$[D \rightarrow M - R]^{+} X- \qquad (II),$$

   where

   M: is Ca, Sr or Ba,

   L: is a polymerization-inactive ligand,

   R: is a carbanion as polymerization-active ligand,

   D: is a donor ligand, and

   X: is a non-coordinating anion.

**2.** A polymerization initiator as claimed in claim 1 comprising a mixture of two or more alkaline earth metal compounds of the formula I or II.

**3.** A polymerization initiator as claimed in claim 1 or 2, additionally comprising alkaline earth metal compounds of the formulae III and IV:

$$L - M - L \qquad (III)$$

$$R - M - R \qquad (IV),$$

where L, M and R are as defined in claim 1.

**4.** A polymerization initiator as claimed in claim 3, wherein the proportion of alkaline earth metal compound of the formula IV is at most 10 mol%, based on the total of all alkaline earth metal compounds.

**5.** A polymerization initiator as claimed in one of claims 1 to 4, wherein the polymerization-inactive ligand L has a lower basicity than polystyryllithium.

**6.** A polymerization initiator as claimed in one of claims 1 to 5, wherein the polymerization-inactive ligand L is

a) a cyclic or open-chain hydrocarbon having a delocalized electron system in which one or more CH fragments can be replaced by isoelectronic fragments,

b) a sterically hindered hydrocarbon bonded via a heteroatom or

c) a cluster bonded via a halogen.

**7.** A polymerization initiator as claimed in one of claims 1 to 6, wherein the donor ligand D is a mono- or polydentate ether, thioether, amine or sulfide.

**8.** A polymerization initiator as claimed in one of claims 1 to 7, wherein the non-coordinating anion X is tetraphenyl borate.

**9.** A process for the preparation of a polymerization initiator as in one of claims 1 to 8, which comprises reacting an alkaline earth metal compound of the formula $R_2M$ with a compound of the formula LH or of the formula $L_2M$, where M, R and L are as defined in claim 1, and H is hydrogen.

**10.** A process for the polymerization of anionically polymerizable monomers, which comprises carrying out the polymerization in the presence of a polymerization initiator as in one of Claims 1 to 9.

## Revendications

**1.** Amorceur de polymérisation contenant un composé de métal alcalino-terreux choisi

a) dans le groupe des composés de métaux alcalino-terreux hétéroleptiques de la formule I :

$$L - M - R \qquad (I)$$

ou

b) dans le groupe des complexes de métaux alcalino-terreux cationiques de la formule II :

$$[D \rightarrow M - R]^{+} X^{-} \qquad (II)$$

dans laquelle

M est Ca, Sr ou Ba,
L est un ligand inactif dans la polymérisation,
R est un carbanion servant de ligand actif dans la polymérisation,
D est un ligand donneur et
X est un anion non coordinant.

**2.** Amorceur de polymérisation selon la revendication 1, contenant un mélange de deux ou plusieurs composés de métaux alcalino-terreux de la formule I ou II.

**3.** Amorceur de polymérisation selon la revendication 1 ou la revendication 2, contenant en plus des composés de métaux alcalino-terreux des formules III et IV :

$$L - M - L \qquad (III)$$

$$R - M - R \qquad (IV)$$

dans lesquelles L, M et R ont la signification indiquée dans la revendication 1.

**4.** Amorceur de polymérisation selon la revendication 3, **caractérisé en ce que** la proportion du composé de métal alcalino-terreux de la formule IV est au maximum de 10% molaires, ramenée à la somme de tous les composés de métaux alcalino-terreux.

**5.** Amorceur de polymérisation selon l'une des revendications 1 à 4, **caractérisé en ce que** le ligand L inactif dans la polymérisation possède une basicité inférieure à celle du polystyryllithium.

**6.** Amorceur de polymérisation selon l'une des revendications 1 à 5, **caractérisé en ce que** le ligand L inactif dans la polymérisation est

a) un hydrocarbure cyclique ou à chaîne ouverte avec un système d'électrons délocalisés dans lequel un ou plusieurs fragments CH peuvent être remplacés par des fragments isoélectroniques,
b) un hydrocarbure à empêchement stérique relié par l'intermédiaire d'un hétéroatome, ou
c) un cluster relié par l'intermédiaire d'un halogène.

**7.** Amorceur de polymérisation selon l'une des revendications 1 à 6, **caractérisé en ce que** le ligand donneur D est un éther, thioéther, amine ou sulfure uni- ou multidentate.

**8.** Amorceur de polymérisation selon l'une des revendications 1 à 7, **caractérisé en ce que** l'anion non coordinant X est un tétraphénylborate.

**9.** Procédé de préparation d'un amorceur de polymérisation selon l'une des revendications 1 à 8, **caractérisé en ce que** l'on fait réagir un composé de métal alcalino-terreux de la formule $R_2M$ avec un composé de la formule LH ou de la formule $L_2M$, où M, R et L ont la signification indiquée dans la revendication 1 et H est mis pour hydrogène.

**10.** Procédé de polymérisation de monomères polymérisables de manière anionique, **caractérisé en ce que** l'on effectue la polymérisation en présence d'un amorceur de polymérisation selon l'une des revendications 1 à 9.